# FASCICULE DE BREVET EUROPEEN

(11) **EP 0 368 977 B1**
(45) Date de publication et mention de la délivrance du brevet: **13.10.1993**
(21) Numéro de dépôt: 89906136.0
(22) Date de dépôt: 22.05.1989
(51) Int. Cl.: B23Q 1/02, B23B 3/16

(54) **MACHINE-OUTIL MULTIFONCTIONS PERMETTANT DES USINAGES COMPLEXES DE PIECES LONGUES**
WERKZEUGMASCHINE FÜR MEHRERE BEARBEITUNGSARTEN UND ZUR KOMPLEXEN BEARBEITUNG VON LANGEN WERKSTÜCKEN
MULTIFUNCTIONAL MACHINE-TOOL FOR COMPLEX MACHINING OF LONG PIECES

(30) Priorité: 25.05.1988 FR 8807261
(43) Date de publication de la demande: 23.05.1990
(73) Titulaire: SOMAB S.A., F-03000 Moulins (FR)
(72) Inventeur: GADAUD, André, F-91700 Ste-Geneviève-des-Bois (FR); GAGNAL, Michel, F-78380 Boujival (FR)
(74) Mandataire: Weitzel, Wolfgang, Dr.-Ing. Patentanwalt
(86) Numéro de dépôt international: FR8900242
(87) Numéro de publication internationale: WO8911374

(56) Documents cités:
- EP-A- 0 259 637
- EP-A- 0 260 180
- CH-A- 479 352
- DE-A- 2 224 761
- DE-A- 3 328 327
- DE-A- 3 420 531
- DE-A- 3 603 612
- DE-B- 1 040 880
- DE-B- 2 259 372
- FR-A- 2 585 276

## Description

La présente invention est du domaine des machines-outils destinées à l'usinage de pièces par enlèvement de matière et elle a plus particulièrement pour objet une machine multifonctionnelle permettant d'effectuer des opérations d'usinage telles que tournage, fraisage et perçage sur des pièces pouvant être d'assez grande longueur selon le préambule de la revendication 1. Une telle machine est connue par la publication DE-B-2 259 372.

L'invention a pour buts de proposer une machine-outil du domaine précité, pouvant d'une part être utilisée soit en tour parallèle, soit en fraiseuse, soit en "centre d'usinage", c'est-à-dire avec une succession d'outils fixes ou rotatifs, et d'autre part permettre l'usinage complexe (suivant au moins deux axes dont un de révolution) de pièces relativement longues (L/D > 3) où L désigne la longueur et D le diamètre de la pièce.

On connaît en premier lieu les tours dits parallèles, dans lesquels une pièce à usiner est supportée par une broche porte-pièce, dite mandrin, la rotation de la pièce s'effectuant autour d'un axe de révolution C généralement horizontal, tandis qu'un outil fixe peut se mouvoir dans deux directions (X,Y) perpendiculaires entre elles d'un plan parallèle à l'axe C ; généralement, mais nécessairement lorsqu'il s'agit de pièces dont la dimension (L) suivant l'axe C est supérieure à environ trois fois la dimension transversale (D), on utilise une contrepointe tournante coaxiale au mandrin.

Le brevet FR 2.581.907 (WIRTH & CRUFFAT) divulgue une adaptation particulièrement moderne de tour, dans laquelle la broche porte pièce est montée coulissante sur des guides, tandis qu'un porte-outil peut supporter des outils fixes aussi bien que tournants.

On connaît aussi des tours dits verticaux dans lesquels l'axe de révolution du porte-pièce est vertical ; les tours verticaux ne sont pas pourvus de contrepointe et ils sont en général réservés à l'exécution de pièces lourdes et massives.

On connaît en second lieu les fraiseuses, dans lesquelles la pièce à usiner est fixée sur une table pouvant être déplacée suivant trois axes orthogonaux ; la pièce à usiner est présentée à un outil tournant (fraise) supporté par une broche rotative et monté en regard de la table, l'axe de rotation de l'outil étant généralement perpendiculaire à l'un des axes de déplacement de la table.

On connaît en troisième lieu des machines-outils plus complexes relevant du principe de fonctionnement des fraiseuses dans lesquelles la pièce à usiner est supportée par une table fixe tandis qu'un outil rotatif est déplacé suivant trois axes orthogonaux ; généralement ces machines-outils, dites centres d'usinage, sont pourvues de moyens de chargement automatique de la broche porte-outil ainsi que de moyens de commande numériques du chargement et du déplacement de l'outil. Les centres d'usinage sont bien adaptés pour effectuer une succession d'opérations sur une même pièce, généralement massive, telle que les blocs de moteurs ; l'échange des outils est effectué par une machine annexe dite changeur d'outil obéissant au programme général de commande ; sans doute l'échange automatique des outils occupe-t-il un certain temps du fonctionnement de la machine, mais le haut degré d'automatisation de ces machines compense cet inconvénient ; on notera cependant qu'en raison de la complexité de la programmation de leur fonctionnement, les centres d'usinage sont réservés à la production en grande série.

On connaît aussi des machines-outils du type comportant l'organisation fonctionnelle des tours verticaux, mais avec trois axes de déplacement de l'outil par rapport à la pièce à usiner, et pour certaines la possibilité d'utiliser des outils rotatifs. On notera que le perçage de haut en bas, et quelquefois le fraisage des faces supérieures horizontales, pose le problème de l'évacuation des copeaux.

Un premier exemple de ce type de machine-outil a été divulgué par le brevet US 346.435 (H.HUCKS et AL) ; toutefois la machine de ce brevet est du type à "banc interrompu" ; en outre elle ne comporte qu'une seule broche d'outil qui peut cependant être orientée.

Un second exemple d'une machine du type précité a été divulgué par le brevet FR 2.555.086 (COTTIN). La machine décrite dans ce brevet comporte une tête porte-outil pouvant recevoir soit un outil fixe de tournage, soit un outil rotatif de perçage ou de fraisage ; par rotations et blocages successifs de la broche porte-pièces, on peut usiner par fraisage, les faces de la pièce ; une seconde tête peut équiper cette machine et fonctionner en même temps que la première. Cette machine du type tour vertical ne conviendrait pas pour tourner ou fraiser une pièce d'une certaine longueur et à fortiori pour fraiser une rainure de came en hélice le long d'une telle pièce.

Un troisième exemple de telles machines à structure de tour vertical a été divulgué par le certificat d'Addition FR 2.585.276 (SATECO) rattaché au brevet FR 2.560.541. Les machines décrites dans ces publications comportent comme principale caractéristique l'association d'un porte-pièce rotatif pouvant pivoter dans un plan vertical et d'un porte-outil déplaçable suivant trois axes orthogonaux ; le porte-pièce peut prendre différentes positions indexées, pour des opérations de fraisage.

Un quatrième exemple de telles machines à structure de tour vertical est celui divulgué par le brevet FR 2.558.401 (WASCHINO). Là encore, la structure générale de la machine est celle d'un tour vertical associé à un porte-outil mobile suivant trois axes orthogonaux ; dans cette machine une pluralité d'outils est supportée par une tourelle rotative pouvant être placée dans diverses positions indexées ; grâce à celà, il est possible de tourner une pièce, de la percer et de la fraiser sans avoir à démonter et remonter les outils sur la tourelle ; cette disposition résoud le "problème des nombreux changements d'outils pour l'exécution de pièces demandant un grand nombre d'usinages différents", "sans avoir recours à l'utilisation d'une machine-outil d'un modèle plus grand que celui réellement nécessaire pour l'exécution des usinages proprement dits".

A propos de la machine-outil précitée, on observera tout d'abord que le nombre des outils montés sur la tourelle ne peut être que réduit, de l'ordre de la dizaine par exemple (le dessin en suggère un nombre de six). Or il est fréquent qu'une cinquantaine d'outils différents soit utilisée : forets et fraise de différents diamètres, outils de tournage de formes, de rayons et d'orientations différents ; en outre un outil nécessite d'être assez fréquemment réaffuté et souvent, de ce fait, à diamètre inférieur.

On observera ensuite que la pièce usinée ne peut pas être très longue (L/D > 3) sous peine de fléchir. On observera enfin que cette machine n'est pas prévue pour entraîner simultanément la pièce en rotation et l'outil rotatif en translation, donc par exemple fraiser une rainure hélicoïdale, ce qui nécessiterait une rotation lente du porte-pièce qui n'est pas prévue.

Il apparaît ainsi qu'aucune des machines-outils de l'art antérieur connu de la Demanderesse, n'atteint l'ensemble des buts qu'elle a fixé à sa démarche inventive.

Selon la présente invention, une machine-outil destinée à l'usinage des pièces par enlèvement de copeaux, du genre machine-outil constituée essentiellement d'un porte-pièce rotatif et d'un porte-outil mobile par rapport à la pièce suivant au moins deux axes orthogonaux, le porte-pièce et le porte-outil étant supportés par un bâti commun, le porte-outil pouvant supporter des outils fixes et/ou des outils rotatifs, le porte-pièce pouvant être entraîné à vitesse lente, un chargeur pouvant être associé à la machine, le porte-pièce étant rotatif autour d'un axe C dit de tournage horizontal et parallèle à l'un desdits deux axes orthogonaux, le porte-outil comportant deux mandrins de serrage, l'un pour un outil fixe, l'autre pour un outil rotatif, le porte-pièce étant en relation avec des moyens d'entraînement lui conférant l'une des trois cinématiques du groupe de cinématiques suivant : l'immobilisation en une position angulaire déterminée, une vitesse de rotation dite lente, pour des opérations de fraisage et une vitesse, dite élevée, pour le tournage, est caractérisée :
en ce que :
- le porte-outil est mobile par rapport à la pièce suivant un troisième axe Z perpendiculaire aux deux axes orthogonaux X,Y,
- ledit axe de tournage C surplombe une table fixée au dit bâti, table dont la face supérieure plane est parallèle au dit axe de tournage C et comporte des moyens de fixation d'un ou plusieurs moyens de support et/ou de centrage,
- ladite vitesse de rotation lente est comprise entre 10⁻² et 10 tours/min et ladite vitesse rapide est d'environ 10³ fois la vitesse de rotation lente.
- le porte-outil est une tourelle rotative indexable en au moins quatre positions, son axe de rotation étant parallèle à l'axe Y,
- les mandrins du porte-outil sont actionnables en serrage et en desserrage par des moyens compris dans la tourelle, chacun des deux mandrins pouvant prendre deux positions de travail (horizontale et verticale), une position d'escamotage, et une position de chargement-déchargement, cette dernière position étant commune aux deux mandrins en vue d'utiliser un chargeur associé à la machine-outil,
   d'où il résulte qu'une pièce complexe même relativement longue peut être usinée sans avoir à la démonter du porte-pièce,
   d'où il résulte finalement une très grande précision de la position des différents usinages les uns par rapport aux autres.

Il résulte de cettes caractéristiques que des opérations de tournage, de fraisage et d'usinage complexe telles que fraisage de rainure de came hélic-oidale, peuvent être réalisées sur une pièce relativement longue (L/D > 3) sans avoir à démonter la pièce du porte-pièce, avec comme conséquence de cela une très grande précision de la position des différents usinages les uns par rapport aux autres.

La face supérieure de ladite table est normalement horizontale, ou encore parallèle à un autre (Y) desdits trois axes orthogonaux et elle est rainurée, parallèlement à l'axe de tournage, pour permettre la fixation desdits moyens de support et/ou de centrage ; la table est solidaire du bâti et elle servira accessoirement de table fixe de fraisage.

Pour cette dernière raison la table à rainure est ,plus avantageuse qu'un moyen du genre banc à glissières, sensiblement équivalent dans sa fonction de support de la contrepointe.

Les mandrins du porte-outil d'une part sont actionnables en serrage et en desserrage par des moyens compris dans la tourelle, d'autre part peuvent être orientés dans le plan ZC par l'utilisateur selon le besoin et notamment peuvent prendre chacun deux positions principales de travail (horizontale et verticale), une position d'escamotage, et une position de chargement-de-chargement, cette dernière position étant commune aux deux mandrins tandis qu'enfin un chargeur est associé à la machine-outil

Une tête porte-outil répondant aux fonctions précitées est décrite dans une demande de brevet français au nom de la Demanderesse, déposée conjointement et intitulée : "Tête d'usinage polyvalente pour machines-outils".

Suivant une disposition constructive, les deux premières cinématiques du groupe sus-visé, à savoir l'immobilisation et la vitesse lente, mettent en oeuvre un mécanisme à roue dentée et vis tangente ; il en résulte que ces cinématiques peuvent être contrôlées de façon très précise.

Suivant une autre disposition constructive le banc porte-outil comporte un premier couple de glissières parallèles à l'axe C et disposées dans un plan sensiblement horizontal ; ces premières glissières servent de guide à un premier chariot mobile horizontalement supportant une colonne à extension sensiblement verticale ; la colonne comporte un deuxième couple de glissières parallèles et disposées dans un plan perpendiculaire au plan des premières glissières et perpendiculaire à l'axe C ; ces deuxièmes glissières servent de guide à un deuxième chariot mobile verticalement ; le deuxième chariot comporte un troisième couple de glissières parallèles et disposées dans un plan perpendiculaire au plan des premières glissières, et parallèle au plan des deuxièmes, donc lui aussi perpendiculaire à l'axe C ; ces troisièmes glissières servent de guide à un troisième chariot mobile horizontalement, dit "bélier", supportant à son extrémité la tourelle porte-outil d'axe de rotation parallèle à la fois au plan des premières glissières et au plan des deuxièmes glissières, donc parallèle à l'axe Y.

Chacun des chariots sus-visés est mû le long de sa glissière par un mécanisme à écrou et vis entrainée en rotation par un moteur de type asynchrone piloté par variateur de fréquence ; la position de chaque chariot est repérée par un dispositif de règle à vernier au 1/1000 de mm, à lecture optique par exemple ; le repérage est transmis à un processeur électronique dont le programme assure le contrôle, la commande et la coordination des mouvements des chariots ; on notera alors que dans le cas où la tourelle peut être indexée en plus de quatre positions, soit par exemple en des positions écartées d'un degré d'angle, un déplacement quasi-continu de l'outil le long de son axe de rotation est rendu possible par la coordination des mouvements des chariots, quelle que soit l'inclinaison de l'axe de l'outil dans le plan de rotation de la tourelle. Cette disposition trouve tout son intérêt en raison du fait que, comme dit plus haut, une opération d'usinage mettant en oeuvre un tel déplacement de l'outil le long de son axe de rotation, peut être exécutée entre, ou à la suite, d'autres opérations, sans qu'il soit nécessaire d'effectuer une reprise de la pièce.

La présente invention sera mieux comprise et des détails en relevant apparaîtront à la description qui va être faite d'une forme particulière de réalisation en relation avec les figures des planches annexées dans lesquelles :
- la fig.1 est une représentation en perspective d'une pièce usinée en une seule prise, par la machine-outil de l'invention,
- la fig. 1a est une représentation analogue d'un autre exemple de pièce usinée,
- la fig.2 est une perspective illustrant les principaux éléments de structure de la machine-outil,
- les fig.3,4 et 5 en sont respectivement une élévation en bout, de côté et une vue partielle de dessus,
- la fig.6 est une élévation schématique partielle de côté, illustrant la coopération d'organes essentiels,
- la fig.7 est une perspective illustrant la machine-outil dans son ensemble,
- La fig.8 illustre de face un rideau protecteur dont est équipée la machine-outil.

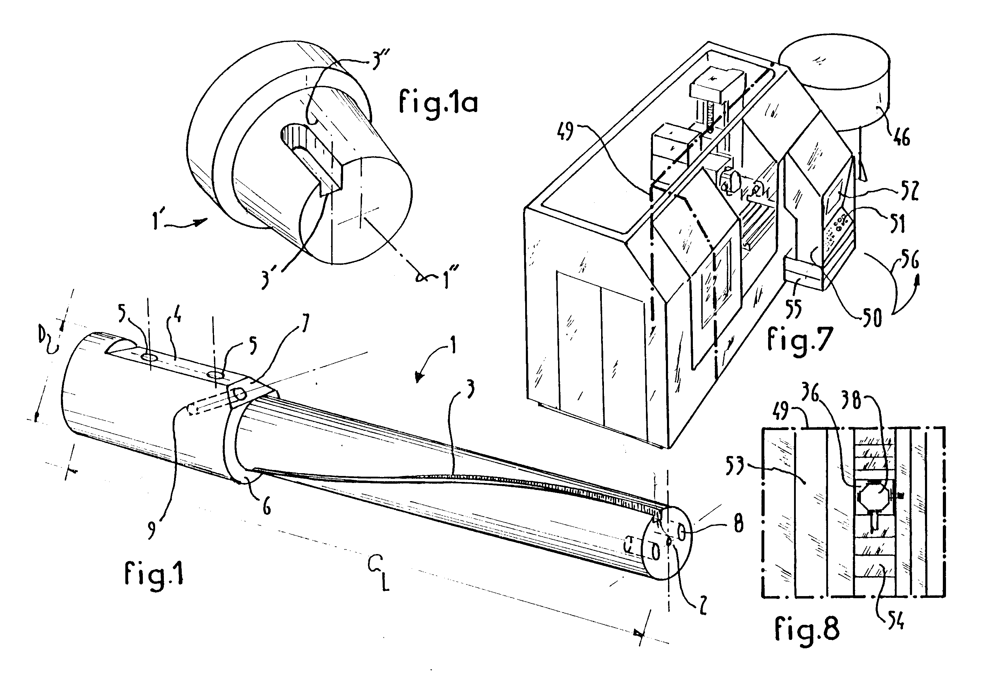

Sur la fig.1, une pièce de mécanique, purement imaginaire, a la forme générale d'un cylindre allongé comportant une longueur L supérieure à sa dimension transversale D ; le rapport L/D est manifestement supérieur à trois et l'usinage d'une telle pièce, surtout s'il s'agit d'un usinage précis (tolérance inférieure au dixième de millimètre) serait impossible sans l'utilisation d'une contrepointe ; à cet effet, la pièce l qui est prise entre les mors par son extrémité gauche sur la figure peut être maintenue à son autre extrémité par la contrepointe grâce à un trou de centrage 2 ; la pièce comporte différents usinages : une rainure hélicoïdale 3 s'étendant sur sa majeure partie depuis son extrémité, un méplat 4 percé de trous 5 perpendiculaires à l'axe C de tournage, un épaulement 6 et un congé plan 7 raccordant le méplat à la partie du plus petit diamètre ; le congé 7 est lui-même percé d'un trou cylindrique 9 perpendiculaire au plan du congé, donc incliné sur l'axe C et décalé par rapport au plan médian du méplat. Sur la fig.1a une autre pièce 1' est constituée d'une partie cylindrique et d'une partie tronconique ; la partie tronconique comporte une rainure 3' ayant un plan médian 3'' désaxé par rapport à l'axe 1'' de la pièce. Il est tout à fait évident que de telles pièces ne pourraient être exécutées sans reprise avec les machines connues de l'art antérieur cité plus haut tandis qu'il apparaîtra à l'homme de l'art qu'elles peuvent l'être, avec la machine-outil de l'invention.

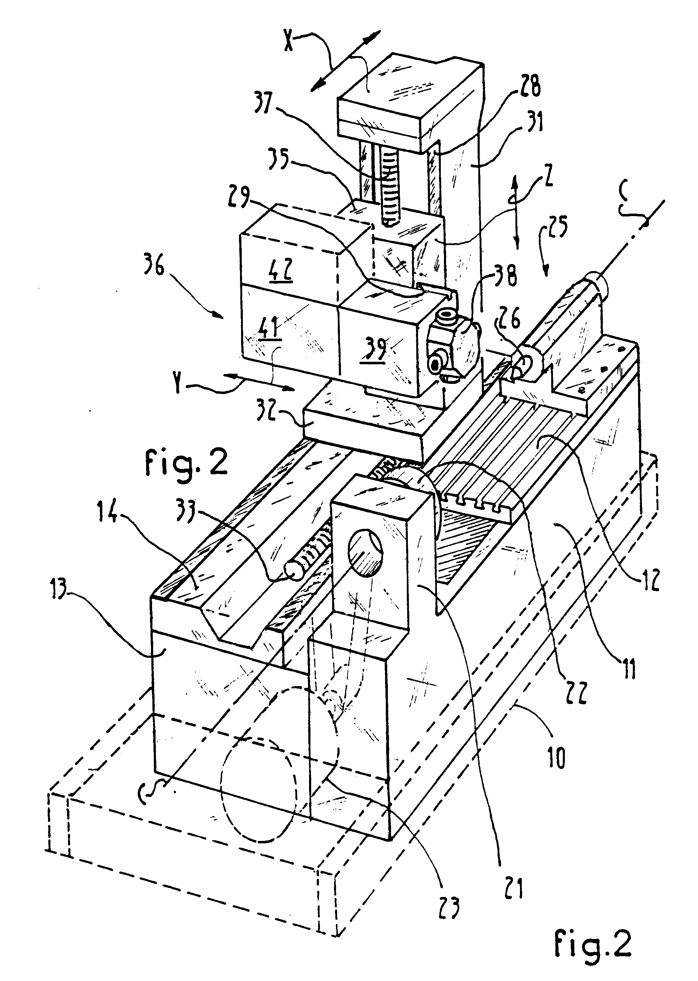

Sur la fig.2, la structure de base d' une machine-outil de l'invention, dit machine multifonctionelle, comprend un banc porte-pièce 11, dit premier, supportant une table à rainures 12 et un banc porte-outil 13, dit second, supportant un couple de premières glissières 14.

Dans la forme de réalisation, préférée, le premier banc 11 et le second banc 12 sont des éléments formés de granit ou de granit reconstitué, les glissières 14 sont réalisées en fonte et la table 12 en acier ; les bancs 11 et 13 sont assemblés par boulonnage de telle manière qu'aucun jeu ne soit possible entre eux, et ils constituent le bâti fixe de la machine-outil ; le bâti fixe supporte aussi un châssis mécano-soudé 10 qui supporte lui-même des sous-ensembles et des organes de la machine qui seront décrits plus loin.

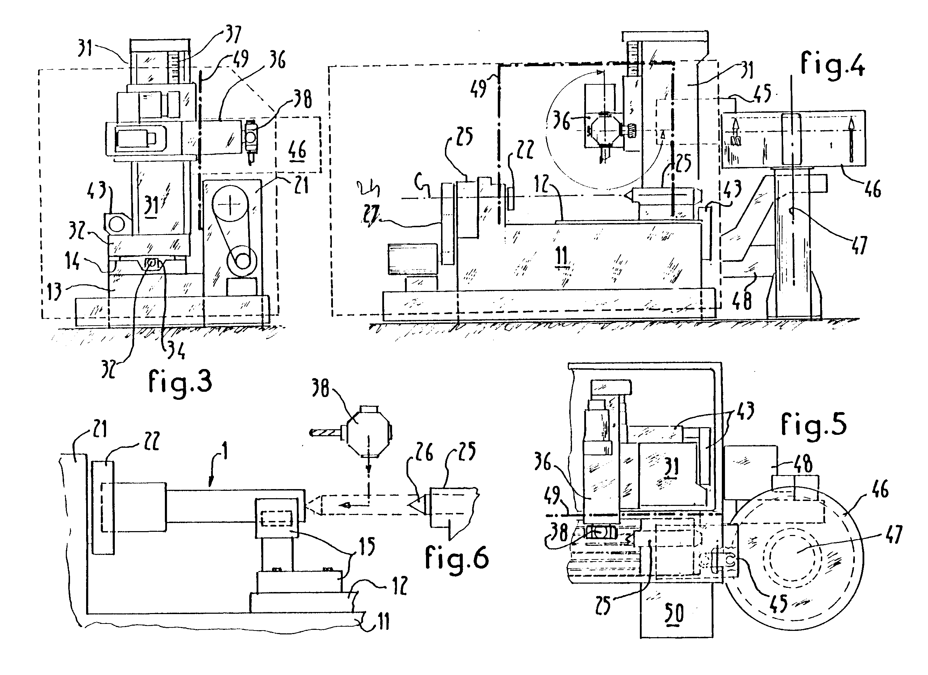

Le banc 11 comporte une excroissance verticale 21 formant la poupée fixe des tours traditionnels, sur laquelle est monté rotatif le mandrin porte-pièce ; de l'autre côte de la poupée un espace est ménagé au-dessus du banc pour recevoir les organes de démultiplication de l'entraînement du mandrin et de son immobilisation (ces organes sont représentés par 26 sur la fig.4) ; un moteur d'entraînement 23 est esquissé fixé au socle à l'arrière des organes auxquels il est relié par une courroie 27 (fig.4). La partie du banc 11 située en regard du mandrin est évidée pour constituer une goulotte à copeaux. Une poupée mobile 25 comportant une contrepointe rétractile 26 est supportée par la table 12 profitant, pour sa fixation, des rainures de cette dernière ; la poupée mobile peut être déplacée le long de la table en restant alignée sur l'axe C du mandrin 22.

Les glissières 14 servent de guide de translation à un premier chariot 31 en forme de colonne verticale pourvue d'une semelle 32 à plan allongé dans le sens des glissières ; le premier chariot 31 peut se déplacer le long de ses glissières 14 suivant une direction X parallèle à l'axe C du mandrin ; le mouvement chariot 31 est induit par la rotation d'une vis 33 portée par la semelle 32 coopérant avec un écrou 34 (fig.3) solidaire du bâti.

La colonne 31 sert, grâce à des glissières 28, de guide de translation à un deuxième chariot 35 pouvant être déplacé suivant une direction Z perpendiculaire à la direction X et perpendiculaire au plan de la table 12 ; la colonne supporte un moteur pour l'entraînement d'une vis 37 pour le déplacement du second chariot.

Le deuxième chariot 35 sert lui-même grâce à des glissières 29 de guide de translation à un troisième chariot 36 suivant un axe Y perpendiculaire à la fois à l'axe X et à l'axe Z. Le troisième chariot 36 supporte une tourelle rotative 38 dont l'axe de rotation, ou d'indexage, est parallèle à l'axe Y de translation du troisième chariot ; il supporte en outre des moyens 39 de commande des différentes manoeuvres de la tourelle, des moyens 41 de déplacement du chariot le long de l'axe Y et des moyens 42 d'entraînement en rotation des outils rotatifs ; les moyens 41 sont essentiellement constitués d'un moteur entraînant une vis portée par le troisième chariot et engrénant dans un écrou solidaire du deuxième chariot, et les moyens 42 sont essentiellement constitués d'un moteur entraînant par courroie, arbre et renvoi d'angle dans la tourelle, le mandrin porte-outil de celle-ci. Les moyens 41 et 42 relevant de l'art connu des machine-outils modernes ne seront pas plus explicitement décrits.

Les fig.3 à 5, sur lesquelles sont reportées un certain nombre de références de la figure précédente, permettent de mieux situer les différents éléments constitutifs de la machine-outil ; on remarque en outre sur ces figures la position des moyens 43 d'entraînement de la vis 33, supportés par la semelle 32 ; on y remarque aussi un changeur d'outils 45 disposé sensiblement au-dessus de l'extrémité du banc 11 à proximité d'un magasin d'outils 46 situé dans le prolongement du banc 11 ; dans l'exemple représenté sur la figure le magasin est du type à carrousel tournant autour d'un axe vertical 47, mais il pourrait aussi bien être du type à chaîne. Le changeur, dans une forme de réalisation, saisit les outils positionnés verticalement dans le magasin, et après les avoir fait pivoter de 90° les introduit horizontalement dans l'un des mandrins de la tourelle. Un convoyeur à copeaux 48 est disposé dans le prolongement des bancs 11 et 13.

Sur la fig.6, il apparaît que la table 11 peut aussi recevoir en plus de la poupée mobile un support à galets 15 destiné à soutenir l'extrémité de la pièce usinée pour le cas où des usinages tels que les trous 8 (fig.1) devraient être exécutés sur la face d'extrémité de la pièce. Dès lors la contrepointe 25 peut être utilisée pour le réglage des galets, puis être escamotée pour permettre le passage de l'outil et de la tourelle porte-outil ; cette figure illustre bien la coopération des différents moyens et dispositions entrant dans la caractéristique générale définie plus haut.

Sur la fig.7, on remarque plus particulièrement un pupitre de commandes 50 comprenant des claviers tels que 51 et un écran cathodique tel que 52, ce pupitre étant disposé contre la face avant de la machine-outil sensiblement en regard de la poupée mobile. Le pupitre 53 est supporté par un mécanisme de bras articulés 55 leur permettant d'être placés (flèche 56) dans n'importe quelle position pratique devant le compartiment d'usinage.

Sur la fig.8, mais également sur les fig.3,4,5 et 7, un trait mixte 49 symbolise une cloison qui sépare un premier compartiment d'usinage situé grosso modo au-dessus du premier banc 8, d'un second compartiment dans lequel sont disposés les moteurs et leurs accessoires de contrôle (règle à vernier) de commande, de lubrification, etc... Cette cloison comporte dans sa partie longitudinale et sensiblement dans le plan d'appui du premier banc contre le second, un rideau à lames verticales 53 et horizontales 54 entourant le troisième chariot, ou bélier, 36 ; les lames, montées glissantes les unes sur les autres, autorisent le déplacement triaxial du bélier, tout en assurant la séparation des deux compartiments. Cette disposition de cloison évite que des copeaux ou autres particules ne pénètrent dans le premier compartiment pour y entraver le fonctionnement des organes sensibles qu'il contient.

Bien que la commande de la machine-outil ne rentre pas dans le champ de la présente invention, on notera cependant que cette commande est avantageusement de type numérique et qu'elle peut procèder de l'exécution d'une série de programmes élémentaires comportant des paramètres non définis représentant les cotes et les conditions d'usinage (vitesses de déplacement, vitesses de rotation, type d'outils, etc...) ; la machine-outil comporte donc des moyens d'introduction de ces paramètres ; elle comporte aussi des moyens de commande du déplacement linéaire de l'outil et/ou de rotation du porte-pièce, à la volonté de l'utilisateur ; elle comporte enfin des moyens de mémorisation des opérations volontaires ou programmées, effectuées durant la période de mémorisation.

## Revendications

1. Machine-outil destinée à l'usinage des pièces par enlèvement de copeaux, du genre machine-outil constituée essentiellement d'un porte-pièce rotatif (22) et d'un porte-outil (38) mobile par rapport à la pièce suivant au moins deux axes orthogonaux, le porte-pièce et le porte-outil étant supportés par un bâti commun (11), le porte-outil pouvant supporter des outils fixes et/ou des outils rotatifs, le porte-pièce pouvant être entraîné à vitesse lente, un chargeur pouvant être associé à la machine, le porte-pièce étant rotatif autour d'un axe C dit de tournage horizontal et parallèle à l'un desdits deux axes orthogonaux, le porte-outil comportant deux mandrins de serrage, l'un pour un outil fixe, l'autre pour un outil rotatif, le porte-pièce étant en relation avec des moyens d'entraînement lui conférant l'une des trois cinématiques du groupe de cinématiques suivant : l'immobilisation en une position angulaire déterminée, une vitesse de rotation dite lente, pour des opérations de fraisage et une vitesse, dite élevée, pour le tournage, caractérisée :
en ce que :
- le porte-outil (38) est mobile par rapport à la pièce suivant un troisième axe Z perpendiculaire aux deux axes orthogonaux X,Y,
- ledit axe de tournage C surplombe une table (12) fixée au dit bâti, table dont la face supérieure plane est parallèle au dit axe de tournage C et comporte des moyens de fixation d'un ou plusieurs moyens de support et/ou de centrage (15,24),
- ladite vitesse de rotation lente est comprise entre 10⁻² et 10 tours/min et ladite vitesse rapide est d'environ 10³ fois la vitesse de rotation lente.
- le porte-outil (38) est une tourelle rotative indexable en au moins quatre positions, son axe de rotation étant parallèle à l'axe Y,
- les mandrins du porte-outil (38) sont actionnables en serrage et en desserrage par des moyens compris dans la tourelle, chacun des deux mandrins pouvant prendre deux positions de travail (horizontale et verticale), une position d'escamotage, et une position de chargement-déchargement, cette dernière position étant commune aux deux mandrins en vue d'utiliser un chargeur (46) associé à la machine-outil,
d'où il résulte qu'une pièce complexe même relativement longue peut être usinée sans avoir à la démonter du porte-pièce,
d'où il résulte finalement une très grande précision de la position des différents usinages les uns par rapport aux autres ;

2. Machine-outil selon la revendication 1, caractérisée :
en ce que lesdits moyens de centrage sont constitués par la contrepointe (26) d'une poupée mobile fixable sur ladite table ;

3. Machine-outil selon la revendication 1, caractérisée ;
en ce que lesdits moyens de support sont constitués par un support (15) à galets fixable sur la table ;

4. Machine-outil selon la revendication 1, caractérisée :
en ce que les deux premières cinématiques du groupe, à savoir l'immobilisation et la vitesse lente mettent en oeuvre un mécanisme à roue dentée et vis,
d'où il résulte que ces cinématiques peuvent être contrôlées de façon très précise ;

5. Machine-outil selon la revendication 1, dans laquelle le bâti peut être en granit ou matériau similaire, caractérisée :
en ce que le bâti comprend un banc dit porte-pièce (11) et un banc dit porte-outil (13), constitués l'un et l'autre d'une matière du groupe comprenant le granit et le granit reconstitué ;

6. Machine-outil selon la revendication 5, caractérisée :
en ce que le banc porte-outil (13) comporte un couple de premières glissières (14) parallèles à l'axe C et disposées dans un plan sensiblement horizontal, lesdites premières glissières servant de guide à un premier chariot (31,32) mobile horizontalement comprenant une semelle (32) à plan allongé et une colonne (31) à extension verticale,
en ce que la colonne (31) comporte un couple de deuxièmes glissières (28) parallèles à l'axe Z et disposées dans un plan perpendiculaire au plan desdites premières glissières, et perpendiculaire à l'axe C, lesdites deuxièmes glissières servant de guide à un deuxième chariot (35) mobile verticalement, et
en ce que le deuxième chariot comporte un couple de troisièmes glissières parallèles à l'axe Y et disposées dans un plan perpendiculaire au plan des premières glissières et parallèle au plan des deuxièmes glissières, donc perpendiculaire à l'axe C, les troisièmes glissières servant de guide à un troisième chariot (36), mobile horizontalement dit "bélier", et supportant à son extrémité le porte-outil ;

7. Machine-outil selon la revendication 6, caractérisée :
en ce que :
- le premier chariot (31,32) est mû par une vis (33) engrènant dans un écrou (34), la vis étant supportée par le premier chariot et l'écrou étant solidaire du bâti,
- le deuxième chariot (35) est mû par une vis (37) supportée par la colonne (31), la vis engrènant dans un écrou solidaire du deuxième chariot,
- le troisième chariot (36) est mû par une vis supportée par lui-même et engrènant dans un écrou solidaire du deuxième chariot, et
en ce que les vis sont entraînées en rotation chacune par un moteur asynchrone piloté par variateur de fréquence ;

8. Machine-outil selon la revendication 7, caractérisée :
en ce que la position de chaque chariot (32,35,36) est repérée par un dispositif de règle à vernier ;

9. Machine-outil selon la revendication 6, pouvant comporter un panneau de protection à volets rigides superposables, caractérisée :
en ce qu'une cloison (49) sépare un premier compartiment dit d'usinage situé au-dessus du premier banc (11), d'un second compartiment dans lesquels sont disposés des organes sensibles, et
en ce que ladite cloison comprend dans sa partie longitudinale un rideau à deux groupes de lames : lames verticales (53) et à lames horizontales (54) chaque groupe entourant le bélier (36); lesdites lames de chacun des groupes étant montées coulissantes les unes sur les autres pour autoriser le mouvement biaxial du bélier.

## Claims

1. A machine tool intended for the machining of parts by the removal of shavings, of the machine-tool type formed essentially of a rotary workpiece holder (22) and a toolholder (38) which is moveable with respect to the workpiece along at least two orthogonal axes, the workpiece holder and the toolholder being supported by a common frame (11), it being possible to support stationary tools and/or rotary tools, it being possible for the workpiece holder to be driven at slow speed, it being possible for a carriage to be associated with the machine tool, the workpiece holder being rotatable about an axis C, known as horizontal turning axis and parallel to one of the said two orthogonal axes, the toolholder comprising two clamping mandrels, one for a stationary tool, the other for a rotary tool, the workpiece holder being in relation with drive means conferring upon it one of the three states of motion from the following groups of rate of motion the immobilising in a given angular position, a so-called slow speed of rotation for milling operations not parallel to the turning axis and a so-called high speed for turning, characterised in that
- the toolholder (38) is moveable with respect to the workpiece along a third axis Z which is perpendicular to the two orthogonal axes X, Y,
- the said axis of turning C overlies a table (12) fastened to the said frame, the flat upper face of which table is parallel to the said axis of turning C and comprises means for fastening one or more support and/or centering means (15, 24)
- the said speed of slow rotation is between 10⁻² and 10 rpm and the said fast speed is about 10³ times the slow speed of rotation,
- the toolholder (38) is a rotary turret which is indexable in at least four positions, its axis of rotation being parallel to the axis Y,
- the mandrels of the toolholder (38) can be driven for clamping and unclamping by means contained within the turret, it being possible for each of the two mandrels to assume two operating positions (horizontal and vertical), a retracted position and a loading-unloading position, the latter position being common to the two mandrels with a view to using a loader (46) associated with the machine tool whereby a complex, even relatively long workpiece can be machined without having to remove it from the workpiece holder; whereby results finally a very great precision of the position of the different machinings with respect one to the other.

2. A machine tool according to Claim 1, characterised in that the said centering means are formed by the centre (26) of a moveable tailstock which can be fastened on the said table.

3. A machine tool according to Claim 1, characterised in that the said support means are formed by a roller support (15) which can be fastened to the table.

4. A machine tool according to Claim 1, characterised in that the first two movements of the group, namely the immobilising and the slow speed, employ a toothed wheel and screw mechanism whereby the motion can be controlled very precisely.

5. A machine tool according to Claim 1, in which the frame may be granite or similar material, characterised in that the frame comprises a so-called workpiece holder bench (11) and a so-called toolholder bench (13) both formed of a material from the group comprising granite and reconstituted granite.

6. A machine tool according to Claim 5, characterised in that the toolholder bench (13) comprises a pair of first sideways (14) parallel to the axis C and arranged in a substantially horizontal plane, the said first slideaways serving as a guide for a horizontally moveable first carriage (31, 32) comprising a saddle (32) with elongated plane and a column (31) of vertical extension, in that the column (31) comprises a pair of second sideways (28) parallel to the axis Z and arranged in a plane perpendicular to the plane of the said first sideways, and perpendicular to the axis C, the said second sideways serving as guide for a second vertically moveable carriage (35), and in that the second carriage comprises a pair of third slideways which are parallel to the axis Y and arranged in a plane perpendicular to the plane of the first sideways and to the axis C, the third sideways serving as guide for a third horizontal moveable carriage (36) and known as a "ram", and supporting the toolholder at its end.

7. A machine tool according to Claim 6, characterised in that:
- the first carriage (31, 32) is moved by a screw (33) engaging in a nut (34), the screw being supported by the first carriage and the nut being integral with the frame,
- the second carriage (35) is moved by a screw (37) supported by the column (31), the screw engaging in a nut which is integral with the second carriage,
- the third carriage (36) is moved by a screw supported by the carriage itself and engaging in a nut which is integral with the second carriage, and in that the screws are driven on rotation each by an asynchronous motor controlled by frequency variators.

8. A machine tool according to Claim 7, characterised in that the position of each carriage (32, 35, 36) is indicated by a Vernier rule device.

9. A machine tool according to Claim 6, which may comprise a protection panel with rigid superimposable shutter, characterised in that a partition (49) separates a first so-called machining compartment located above the first bench (11) from a second compartment in which centering members are arranged, and in that the said partition comprises in its longitudinal part a curtain with two groups of slats; vertical slats (53) and horizontal slats (54) each group surrounding the ram (36); the said slats of each group being mounted for sliding on each other in order to permit the biaxial movement of the ram.

## Patentansprüche

1. Werkzeugmaschine zum spanabhebenden Bearbeiten von Werkstücken, im wesentlichen bestehend aus einem umlaufenden Werkstückhalter (22) und einem Werkzeugträger (38), der in Bezug auf das Werkstück entlang wenigstens zweier zueinander senkrechter Achsen beweglich ist, wobei Werkstückhalter und Werkzeugträger von einem gemeinsamen Gestell getragen sind, wobei der Werkzeugträger feste und/oder umlaufende Werkzeuge tragen kann, und der Werkstückhalter bei geringer Geschwindigkeit angetrieben werden kann, wobei eine Belastungsvorrichtung der Maschine zugeordnet sein kann, wobei der Werkstückhalter um eine sogenannte Drehachse (C) umläuft, die horizontal und parallel zu einer der genannten rechteckigen Achsen verläuft, der Werkzeugträger zwei Spannfutter umfaßt, das eine für ein festes Werkzeug und das andere für ein umlaufendes Werkzeug, wobei der Werkstückhalter mit einem Antrieb in Verbindung steht, der ihn in einen der folgenden drei Bewegungszustände versetzt:
Stillsetzen in einer bestimmten Winkelposition, eine sogenannte geringe Umlaufgeschwindigkeit für Fräsarbeiten, die nicht parallel zur Drehachse verlaufen, und eine erhöhte Geschwindigkeit zum Drehen, dadurch gekennzeichnet,
daß der Werkzeugträger (38) in Bezug auf das Werkstück entlang einer dritten Achse (Z) beweglich ist, die senkrecht zu den beiden rechtwinkligen Achsen (X, Y) verlaufen,
daß die Drehachse (C) oberhalb eines Tisches (12) verläuft, der am Gestell befestigt ist, und dessen obere, ebene Fläche parallel zur Drehachse (C) verläuft und Befestigungsmittel aufweist, die aus einem oder mehreren Mitteln zum Tragen und/oder Zentrieren (15, 24) bestehen,
daß die geringe Umlaufgeschwindigkeit zwischen 10⁻² und 10 U/min liegt, und die sogenannte hohe Geschwindigkeit etwa das 10⁻³-fache der geringen Umlaufgeschwindigkeit beträgt,
daß der Werkzeugträger (38) ein Revolverkopf ist, der in wenigstens vier Positionen indexierbar ist, und dessen Drehachse parallel zur Y-Achse verläuft, daß die Spannfutter des Werkzeuges (38) im Sinne des Spannens und Entspannens durch Mittel beeinflußbar sind, die sich im Revolverkopf befinden, wobei jedes der beiden Spannfutter zwei Arbeitspositionen (horizontal und vertikal), eine Einfahrposition und eine Position zum Belasten-Entlasten aufweist, wobei diese letztgenannte Position den beiden Spannfutter im Hinblick auf das Anwenden einer Belastungsvorrichtung (46) gemeinsam ist, die der Werkzeugmaschine zugeordnet ist,
so daß ein komplexes und selbst relativ langes Werkzeug bearbeitet werden kann, ohne vom Werkzeugträger abgenommen zu werden,
woraus sich schließlich eine sehr hohe Präzision der Position der verschiedenen Bearbeitungen in Bezug zueinander ergibt.

2. Werkzeugmaschine nach Anspruch 1, dadurch gekennzeichnet,
daß die genannten Zentriermittel aus der Spitze (26) eines am Tisch befestigbaren Reitstockes bestehen.

3. Werkzeugmaschine nach Anspruch 1, dadurch gekennzeichnet,
daß die genannten Tragmittel aus einer am Tisch befestigbaren Rollenkonsole (15) bestehen.

4. Werkzeugmaschine nach Anspruch 1, dadurch gekennzeichnet,
daß die beiden ersten Bewegungszustände, nämlich das Stillsetzen und die geringe Geschwindigkeit einen Schneckentrieb in Gang setzen,
so daß die Bewegungszustände sehr genau steuerbar sind.

5. Werkzeugmaschine nach Anspruch 1, wobei das Gestell aus Granit oder ähnlichem Werkstoff besteht, dadurch gekennzeichnet,
daß das Gestell eine sogenannte Werkstückträgerbank (11) und eine sogenannte Werkzeugträgerbank (13) umfaßt, die jeweils aus einem Material aus Granit oder einem Granit-Austauschstoff bestehen.

6. Werkzeugmaschine nach Anspruch 5, dadurch gekennzeichnet,
daß die Werkzeugträgerbank (13) ein Paar erster Gleitschienen (14) aufweist, die parallel zur C-Achse sowie in einer im wesentlichen horizontalen Ebene angeordnet sind, und die zum Führen eines ersten Schlittens (31, 32) dienen, welcher horizontal verfahrbar ist und eine Sohle (32) mit einer langgestreckten Fläche sowie eine Säule (31) vertikaler Erstreckung umfassend,
daß die Säule (31) ein Paar zweiter Gleitschienen (28) aufweist, die parallel zur Z-Achse sowie in einer zu den genannten ersten Gleitschienen senkrechten Ebene verläuft, sowie senkrecht zur C-Achse, und die als Führung für einen zweiten vertikal verfahrbaren Schlitten (35) dienen, und
daß der zweite Schlitten ein Paar dritter Gleitschienen aufweist, die parallel zur Y-Achse sowie in einer zur Ebene der ersten Gleitschienen senkrechten Ebene und parallel zur Ebene der zweiten Gleitschienen angeordnet sind, und somit senkrecht zur C-Achse, die zur Führung eines horizontal beweglichen dritten Schlittens (36), des sogenannten Blockschlittens dienen, der an seinem Ende den Werkzeughalter trägt.

7. Werkzeugmaschine nach Anspruch 6, dadurch gekennzeichnet,
daß der erste Schlitten (31, 32) durch eine Gewindespindel (33) angetrieben ist, die in einer Mutter (34) läuft, wobei die Gewindespindel vom ersten Schlitten getragen ist, und die Mutter mit dem Gestell fest verbunden ist,
daß der zweite Schlitten (35) von einer Gewindespindel (37) angetrieben ist, die von der Säule (31) getragen ist, wobei die Gewindespindel in einer Mutter läuft, die mit dem zweiten Schlitten fest verbunden ist, daß der dritte Schlitten (36) von einer Gewindespindel angetrieben ist, die ihrerseits von einer Mutter getragen ist und in dieser läuft, die mit dem zweiten Schlitten fest verbunden ist, und daß die Gewindespindeln jeweils von einem Asynchronmotor angetrieben sind, der durch einen Frequenzwandler gesteuert ist.

8. Werkzeugmaschine nach Anspruch 7, dadurch gekennzeichnet,
daß die Position eines jeden Schlittens (32, 35, 36) durch eine Nonius-Regelvorrichtung eingestellt wird.

9. Werkzeugmaschine nach Anspruch 6, gegebenenfalls umfassend ein Schutzgehäuse mit steifen, übereinander klappbaren Klappen, dadurch gekennzeichnet,
daß ein Gehäuse (49) ein erstes sogenanntes Arbeitsabteil, das über der ersten Bank (11) angeordnet ist, von einem zweiten Abteil abtrennt, in welchem empfindliche Bauteile angeordnet sind, und daß das Gehäuse in seinem Längsteil einen Vorhang mit zwei Gruppen von Streifen aufweist: vertikale Streifen (53) und horizontale Streifen (54), deren jede den Blockschlitten (36) einhüllen, wobei die Streifen einer jeden Gruppe gleitend aufeinander montiert sind, um ein biaxiales Verschieben des Blockschlittens zu ermöglichen.
